(19) Europäisches Patentamt
European Patent Office
Office européen des brevets

(11) **EP 4 629 470 A1**

(12) **EUROPEAN PATENT APPLICATION**

(43) Date of publication:
**08.10.2025 Bulletin 2025/41**

(21) Application number: **25151951.8**

(22) Date of filing: **15.01.2025**

(51) International Patent Classification (IPC):
*H02J 3/38* (2006.01)      *H02J 3/46* (2006.01)

(52) Cooperative Patent Classification (CPC):
**H02J 3/381; H02J 3/46;** H02J 2300/28

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.04.2024 CN 202410394090**
**02.04.2024 CN 202410394116**

(71) Applicant: **Xiamen Kehua Digital Energy Tech Co., Ltd.**
**Xiamen, Fujian 361101 (CN)**

(72) Inventors:
• **YI, Longqiang**
**XIAMEN 361101 (CN)**

• **LI, Jie**
**XIAMEN 361101 (CN)**
• **PENG, Qianqian**
**XIAMEN 361101 (CN)**
• **LIN, Jianliaoyuan**
**XIAMEN 361101 (CN)**
• **LU, Xiongwei**
**XIAMEN 361101 (CN)**
• **ZHANG, Yuting**
**XIAMEN 361101 (CN)**
• **HU, Bin**
**XIAMEN 361101 (CN)**

(74) Representative: **Regimbeau**
**20, rue de Chazelles**
**75847 Paris Cedex 17 (FR)**

(54) **CURRENT LIMITING CONTROL METHOD AND APPARATUS FOR GRID-FORMING CONVERTER, CONVERTER, AND STORAGE MEDIUM**

(57)     A current limiting control method and apparatus for a grid-forming converter, a converter, and a storage medium are provided. The method includes the following operations. A three-phase output reference voltage of a converter is acquired. A transformation is performed to obtain an output reference voltage on a first axis and an output reference voltage on a second axis in a preset two-phase coordinate system corresponding to the three-phase output reference voltage. Virtual impedance current limiting adjustment is performed on the output reference voltage on the first axis and/or the output reference voltage on the second axis by using a preset maximum output current limit value of the converter, to obtain an target output reference voltage on the first axis and an target output reference voltage on the second axis in the preset two-phase coordinate system, so as to acquire a three-phase target output voltage of the converter.

A three-phase output reference voltage of a converter is acquired. The output end of the converter is connected to the power grid — S101

A transformation is performed to obtain an output reference voltage on the first axis and an output reference voltage on the second axis in a preset two-phase coordinate system corresponding to the three-phase output reference voltage — S102

Virtual impedance current limiting adjustment is performed on the output reference voltage on the first axis and/or the output reference voltage on the second axis by using a preset maximum output current limit value of the converter, to obtain an target output reference voltage on the first axis and an target output reference voltage on the second axis in the preset two-phase coordinate system — S103

The three-phase target output voltage of the converter is acquired according to the target output reference voltage on the first axis and the target output reference voltage on the second axis — S104

**FIG. 1**

## Description

TECHNICAL FIELD

The disclosure relates to the field of power electronics technology, and in particular, to a current limiting control method and apparatus for a grid-forming converter, a converter, and a storage medium.

BACKGROUND

With continuous improvement of the penetration rate of distributed new energy, more and more converters (e.g., inverters) are connected to the power grid, and thus the total damping and total inertia provided by traditional generators in the power grid are greatly reduced. As a result, in case of disturbance, the speed of frequency change of the power grid is faster, and the anti-interference ability is reduced. In order to solve the problem, a concept of Virtual Synchronous Generator (VSG) control technology is proposed. Such control technology may imitate the operating mechanism of the synchronous generator, such that a grid-connected inverter may have power grid support; and may provide inertia performance, frequency and voltage support to the power grid to improve stability of the power grid. The grid-connected control strategy of the converter with voltage source characteristics, such as the VSG control, has a problem that current limiting of the voltage source is difficult, and it is difficult to effectively limit the current output without changing the voltage source characteristics.

In the related art, the controller generally adds an amplitude limiting link of the output current of the converter between its double closed-loop control of voltage and current. When the output reference current of the voltage loop exceeds a certain threshold, the amplitude limiting link will operate to change the reference input current of the current loop, so as to limit the current. In a normal case, current limiting control does not operate. When the converter is subjected to a large disturbance or is in an unstable operating state, current limiting control will be activated to prevent the converter from generating a too large current, which thereby causes a complex transient transition process. However, after current limiting is triggered in such manner, the voltage source will become a current source to control the output and lose the voltage source characteristics, which is easy to cause instability in a weak grid. In addition, the transient transition process of the amplitude limiting is complex, and stability of the power angle is poor. Therefore, it is now an urgent problem to be solved that how to limit the output current of the converter on the basis of maintaining the voltage source characteristics of the converter, to improve stability of the converter while ensuring safe operation of the converter.

SUMMARY

The purpose of the disclosure is to provide a current limiting control method and apparatus for a grid-forming converter, a converter, and a storage medium, so as to limit the output current of the converter on the basis of maintaining the voltage source characteristics of the converter, to improve stability of the converter while ensuring safe operation of the converter.

The disclosure is defined by the claims.

As can be seen, with the disclosure, the virtual impedance current limiting adjustment is performed on the output reference voltage on the first axis and/or the output reference voltage on the second axis by using the preset maximum output current limit value of the converter, to obtain the target output reference voltage on the first axis and the target output reference voltage on the second axis in the preset two-phase coordinate system. The output current of the grid-forming converter may be limited by the virtual impedance control technology, such that the converter may still maintain the voltage source characteristics after current limiting, which improves stability of the converter while ensuring safe operation of the converter.

BRIEF DESCRIPTION OF THE DRAWINGS

In order to illustrate technical solutions in the embodiments of the disclosure or in the related art more clearly, drawings needed to be used in the description of the embodiments or the related art will be briefly introduced below. It is apparent that the drawings described below are only embodiments of the disclosure. For those of ordinary skill in the art, other drawings may also be obtained according to the provided drawings without creative labor.

FIG. 1 is a flowchart of a current limiting control method for a grid-forming converter provided by an embodiment of the disclosure.
FIG. 2 is a block diagram of VSG control for inverter output provided by an embodiment of the disclosure.
FIG. 3 is a flowchart of a current limiting control method for a grid-forming converter provided by an embodiment of the disclosure.

FIG. 4 is a block diagram of VSG control for inverter output provided by an embodiment of the disclosure.

FIG. 5 is a schematic diagram of a topology of a virtual impedance circuit provided by an embodiment of the disclosure.

FIG. 6 is a block diagram of a structure of a current limiting control apparatus for a grid-forming converter provided by an embodiment of the disclosure.

FIG. 7 is a block diagram of a structure of a current limiting control apparatus for a grid-forming converter provided by an embodiment of the disclosure.

FIG. 8 is a schematic diagram of a structure of a converter provided by an embodiment of the disclosure.

FIG. 9 is a schematic diagram of a specific structure of a converter provided by an embodiment of the disclosure.

## DETAILED DESCRIPTION

In order to make the purpose, technical solutions and advantages of the embodiments of the disclosure more clear, the technical solutions in the embodiments of the disclosure will be described clearly and completely in combination with the drawings in the embodiments of the disclosure. It is apparent that the described embodiments are a part of the embodiments of the disclosure, and not all the embodiments. Based on the embodiments of the disclosure, all other embodiments obtained by those of ordinary skill in the art without creative labor fall within the scope of protection of the disclosure.

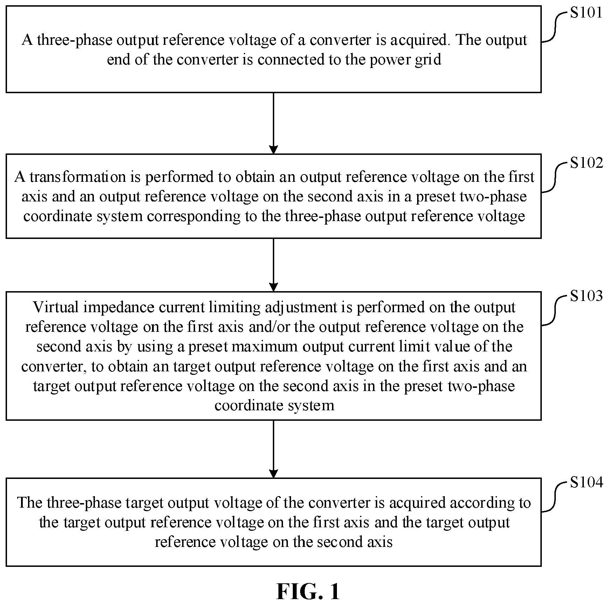

Please refer to FIG. 1, which is a flowchart of a current limiting control method for a grid-forming converter provided by an embodiment of the disclosure. The method may include the following operations.

In operation 101, a three-phase output reference voltage of a converter is acquired. The output end of the converter is connected to the power grid.

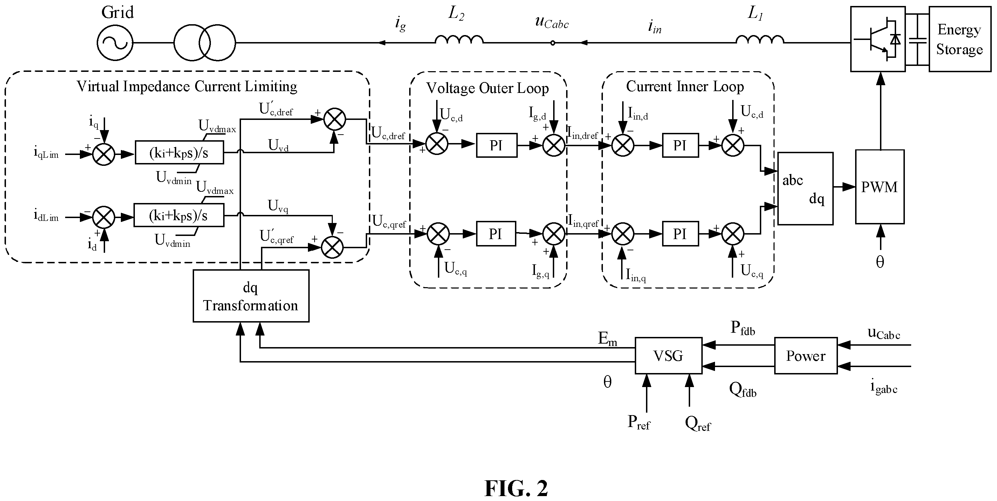

It is to be understood that the converter in the embodiment may be a converter connected to the power grid (i.e., the grid-forming converter), that is, the output end of the converter may be connected to the power grid. The current limiting control method for the grid-forming converter provided by the embodiment may be applied to a control process of a Virtual Synchronous Generator (VSG) of a grid-connected inverter, that is, the grid-connected inverter may adjust the three-phase target output voltage of VSG control (e.g. the three-phase voltage input to the Pulse Width Modulation (PWM) in FIG. 2) by the method provided by the embodiment, to limit the output current of the grid-forming converter. The current limiting control method for the grid-forming converter provided by the embodiment may also be applied to other control processes of the grid-connected converter, such as other control processes of the grid-connected inverter, or a control process of a grid-connected Alternating Current (AC) converter. For example, in a control scenario of an inverter of a Uninterruptible Power System (UPS), the UPS may perform transformation on a three-phase voltage calculated by a phase output in its phase-locked link (i.e., the three-phase output reference voltage) to obtain a two-phase voltage in a preset two-phase coordinate system (i.e., an output reference voltage on the first axis and an output reference voltage on the second axis), and achieve adjustment of the three-phase target output voltage by adjusting the two-phase voltage, to limit the output current of the converter. The embodiment makes no limitation thereon.

Here, the three-phase output reference voltage of the converter in the embodiment may be a three-phase reference voltage needed to be used to obtain a three-phase output voltage target (i.e., the three-phase target output voltage) of the converter, such as a given voltage of the voltage outer loop input to the voltage outer loop control, for example, the three-phase reference voltage of the VSG (e.g. the reference voltage of the three-phase capacitor voltage $u_{Cabc}$ between the filtering inductor $L_1$ of the inverter and the output filtering inductor $L_2$ of the inverter in FIG. 2), or a three-phase voltage corresponding to the phase output in the phase-locked link of the UPS.

Correspondingly, the specific manner for the processor to acquire the three-phase output reference voltage of the converter in the operation may be set by the designer according to practical scenarios and user requirements. For example, it may be achieved in a manner the same as or similar to the calculation method of the reference value of the three-phase output voltage of the converter control in the related art. For example, when applied to the VSG control, as shown in FIG. 2, the processor may calculate an active power $P_{fdb}$ and a reactive power $Q_{fdb}$ according to a collected three-phase capacitor voltage $u_{Cabc}$ and a collected three-phase output current $i_{gabc}$; determine a target output voltage phase $\theta$ and an electromotive force $E_m$ according to the active power $P_{fdb}$, the reactive power $Q_{fdb}$, an active power reference value $P_{ref}$ and a reactive power reference value $Q_{ref}$; and obtain the three-phase output reference voltage, i.e., the reference voltage for adjusting the three-phase capacitor voltage $u_{Cabc}$ (e.g. the given voltage of the voltage outer loop) according to the target output voltage phase $\theta$ and the electromotive force $E_m$. Correspondingly, when applied to the UPS control, a process similar to the phase-locked link of the conventional UPS may be adopted for processing, so as to calculate the three-phase output reference voltage by the phase output in the phase-locked link. The embodiment makes no limitation thereon.

In operation 102, a transformation is performed to obtain an output reference voltage on the first axis and an output reference voltage on the second axis in a preset two-phase coordinate system corresponding to the three-phase output reference voltage.

In the operation, the processor may perform a rotational transformation on the three-phase output reference voltage to obtain corresponding voltage values on the two axes (the first axis and the second axis) in the preset two-phase coordinate system, that is, the output reference voltage on the first axis and the output reference voltage on the second axis.

Correspondingly, the specific type of the preset two-phase coordinate system in the embodiment, i.e., the rotational transformation manner of the three-phase output reference voltage, may be set by the designer according to practical scenarios and user requirements. For example, the preset two-phase coordinate system may be a dq rotary coordinate system (here, the first axis is the d axis and corresponds to an active parameter, and the second axis is the q axis and corresponds to a reactive parameter). That is, the processor may perform a dq transformation on the three-phase output reference voltage to obtain an output reference voltage on the d axis (i.e., the output reference voltage on the first axis) and an output reference voltage on the q axis (i.e., the output reference voltage on the second axis), for example, an initial reference capacitor voltage on the d axis $U'_{c,dref}$ and an initial reference capacitor voltage on the q axis $U'_{c,qref}$ in FIG. 2. The preset two-phase coordinate system may also be other rotary coordinate systems such as an $\alpha\beta$ rotary coordinate system. If the preset two-phase coordinate system is the $\alpha\beta$ rotary coordinate system, the processor may perform an $\alpha\beta$ transformation on the three-phase output reference voltage to obtain an output reference voltage on the $\alpha$ axis (i.e., the output reference voltage on the first axis) and an output reference voltage on the $\beta$ axis (i.e., the output reference voltage on the second axis). The embodiment makes no limitation thereon.

In operation 103, by using a preset maximum output current limit value of the converter, virtual impedance current limiting adjustment is performed on the output reference voltage on the first axis and/or the output reference voltage on the second axis, to obtain at least one of an target output reference voltage on the first axis or an target output reference voltage on the second axis in the preset two-phase coordinate system.

The preset maximum output current limit value includes : an output current limit value on the second axis corresponding to the output reference voltage on the first axis, and/or an output current limit value on the first axis corresponding to the output reference voltage on the second axis.

It is to be understood that the preset maximum output current limit value in the embodiment may be a preset limit value for limiting the output current of the converter (i.e., the three-phase output current). That is, when the preset maximum output current limit value includes the output current limit value on the first axis, the amplitude of the output current on the first axis transformed from the three-phase output current of the converter may be limited to be less than or equal to the amplitude of the output current limit value on the first axis. When the preset maximum output current limit value includes the output current limit value on the second axis, the amplitude of the output current on the second axis transformed from the three-phase output current of the converter may be limited to be less than or equal to the amplitude of the output current limit value on the second axis. In this way, limitation and adjustment on the subsequent output current of the converter may be achieved by setting the preset maximum output current limit value.

That is to say, in the embodiment, by the virtual impedance control technology, the output reference voltage on the first axis and/or the output reference voltage on the second axis may be adjusted according to the preset maximum output current limit value, that is, the reference value for generating the three-phase target output voltage may be adjusted. As shown in FIG. 2, voltages on the two axes needed to be input to the voltage outer loop are changed from the conventional initial reference capacitor voltage on the d axis $U'_{c,dref}$ and initial reference capacitor voltage on the q axis $U'_{c,qref}$ to the adjusted reference capacitor voltage on the d axis $U_{c,dref}$ (i.e., the target output reference voltage on the first axis) and the reference capacitor voltage on the q axis $U_{c,qref}$ (i.e., the target output reference voltage on the second axis). In this way, the three-phase target output voltage for finally controlling a controllable switch (such as a switching tube or a MOS tube) in the converter is adjusted to achieve current limiting of the output current of the converter.

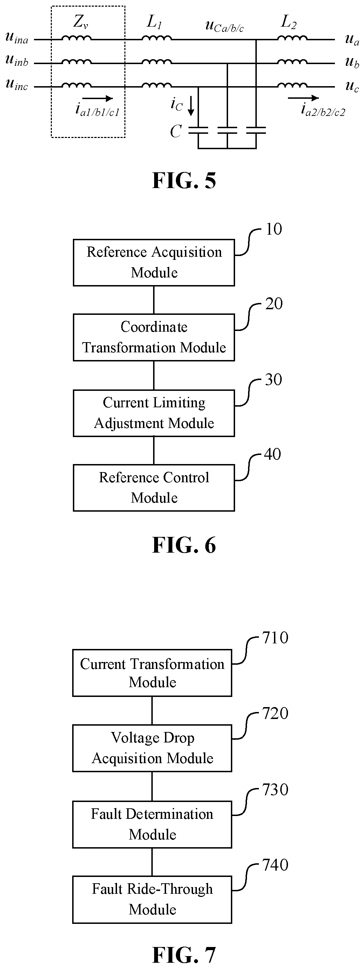

For example, as shown in FIG. 2 and FIG. 5, in case that the method provided by the embodiment is applied to the VSG control, the topology of the control circuit, after a virtual impedance is added, is changed to the form of FIG. 5. The virtual impedance $Z_v$ is added, and $Z_v = \sqrt{R_v{}^2 + X_v{}^2}$ . Here, $R_v$ denotes the impedance of the virtual resistance, and $X_v$ denotes the inductive reactance of the virtual inductor.

According to the KVL (Kirchhoff's law), the relationship of the power grid voltages ($e_a$, $e_b$ and $e_c$), the output voltages of the converter ($u_{Ca}$, $u_{Cb}$ and $u_{Cc}$) and the output currents of the converter ($i_{a2}$, $i_{b2}$ and $i_{c2}$, i.e., the three-phase output current $i_g$) may be obtained as follows.

$$\begin{bmatrix} u_a \\ u_b \\ u_c \end{bmatrix} = R_1 \begin{bmatrix} i_{a1} \\ i_{b1} \\ i_{c1} \end{bmatrix} + L_1 \frac{d}{dt} \begin{bmatrix} i_{a1} \\ i_{b1} \\ i_{c1} \end{bmatrix} + R_v \begin{bmatrix} i_{a1} \\ i_{b1} \\ i_{c1} \end{bmatrix} + L_v \frac{d}{dt} \begin{bmatrix} i_{a1} \\ i_{b1} \\ i_{c1} \end{bmatrix} + \begin{bmatrix} u_{Ca} \\ u_{Cb} \\ u_{Cc} \end{bmatrix} \qquad (1)$$

$$\begin{bmatrix} u_{Ca} \\ u_{Cb} \\ u_{Cc} \end{bmatrix} = R_2 \begin{bmatrix} i_{a2} \\ i_{b2} \\ i_{c2} \end{bmatrix} + L_2 \frac{d}{dt} \begin{bmatrix} i_{a2} \\ i_{b2} \\ i_{c2} \end{bmatrix} + \begin{bmatrix} e_a \\ e_b \\ e_c \end{bmatrix} \qquad (2)$$

$$C \frac{d}{dt} \begin{bmatrix} u_{Ca} \\ u_{Cb} \\ u_{Cc} \end{bmatrix} = \begin{bmatrix} i_{a1} \\ i_{b1} \\ i_{c1} \end{bmatrix} - \begin{bmatrix} i_{a2} \\ i_{b2} \\ i_{c2} \end{bmatrix} \qquad (3)$$

In equations (1) - (3), $R_1$ denotes the resistance impedance on the bridge arm side, $L_1$ denotes the filtering inductor of the converter, $i_{a1}$, $i_{b1}$ and $i_{c1}$ denote the three-phase filtering inductor current, $R_2$ denotes the output resistance impedance of the converter, $L_2$ denotes the output filtering inductor of the converter, $L_v$ denotes the virtual inductor, and $u_a$, $u_b$ and $u_c$ denote the output three-phase voltage. When the dq rotary coordinate system is adopted for the preset two-phase coordinate system, the three-phase coordinate system is transformed to the dq rotary coordinate system, and the following equations may be obtained by further simplification.

$$\begin{bmatrix} u_d \\ u_q \end{bmatrix} = R_1 \begin{bmatrix} i_{d1} \\ i_{q1} \end{bmatrix} + \omega L_1 \begin{bmatrix} 0 & -1 \\ 1 & 0 \end{bmatrix} \begin{bmatrix} i_{d1} \\ i_{q1} \end{bmatrix} + L_1 \frac{d}{dt} \begin{bmatrix} i_{d1} \\ i_{q1} \end{bmatrix} + R_v \begin{bmatrix} i_{d1} \\ i_{q1} \end{bmatrix} + \omega L_v \begin{bmatrix} 0 & -1 \\ 1 & 0 \end{bmatrix} \begin{bmatrix} i_{d1} \\ i_{q1} \end{bmatrix} + L_v \frac{d}{dt} \begin{bmatrix} i_{d1} \\ i_{q1} \end{bmatrix} + \begin{bmatrix} u_{Cd} \\ u_{Cq} \end{bmatrix} (4)$$

$$\begin{bmatrix} u_{Cd} \\ u_{Cq} \end{bmatrix} = R_2 \begin{bmatrix} i_{d2} \\ i_{q2} \end{bmatrix} + \omega L_2 \begin{bmatrix} 0 & -1 \\ 1 & 0 \end{bmatrix} \begin{bmatrix} i_{d2} \\ i_{q2} \end{bmatrix} + L_2 \frac{d}{dt} \begin{bmatrix} i_{d2} \\ i_{q2} \end{bmatrix} + \begin{bmatrix} e_d \\ e_q \end{bmatrix} \qquad (5)$$

$$\omega C \begin{bmatrix} 0 & -1 \\ 1 & 0 \end{bmatrix} \begin{bmatrix} u_{Cd} \\ u_{Cq} \end{bmatrix} + C \frac{d}{dt} \begin{bmatrix} u_{Cd} \\ u_{Cq} \end{bmatrix} = \begin{bmatrix} i_{d1} \\ i_{q1} \end{bmatrix} - \begin{bmatrix} i_{d2} \\ i_{q2} \end{bmatrix} \qquad (6)$$

In equations (4) - (6), $u_d$ and $u_q$ may be obtained from $u_a$, $u_b$ and $u_c$ through the dq rotational transformation. $i_{d1}$ and $i_{q1}$ may be obtained from $i_{a1}$, $i_{b1}$ and $i_{c1}$ through the dq rotational transformation. $u_{Cd}$ and $u_{Cq}$ may be obtained from $u_{Ca}$, $u_{Cb}$ and $u_{Cc}$ through the dq rotational transformation. $i_{d2}$ and $i_{q2}$ may be obtained from $i_{a2}$, $i_{b2}$ and $i_{c2}$ through the dq rotational transformation. $e_d$ and $e_q$ may be obtained from $e_a$, $e_b$ and $e_c$ through the dq rotational transformation. $\omega$ =2*pi*f, here, pi denotes $\pi$, and f denotes the rated frequency of the inductor.

Then the following equations may be obtained. $u_d = (sL_1 + R_1 + sL_v + R_v)i_{d1} - \omega L_1 i_{q1} - \omega L_v i_{q1} + u_{Cd}$, $u_q = (sL_1 + R_1 + sL_v + R_v)i_{q1} + \omega L_1 i_{d1} + \omega L_v i_{d1} + u_{Cq}$, $u_{Cd} = (sL_2 + R_2)i_{d2} - \omega L_2 i_{q2} + e_d$, $u_{Cq} = (sL_2 + R_2)i_{q2} + \omega L_2 i_{d2} + e_q$, $sCu_{Cd} - \omega Cu_{Cq} = i_{d1} - i_{d2}$, and $sCu_{Cq} + \omega Cu_{Cd} = i_{q1} - i_{q2}$. Here, s denotes the operator variable of the Laplace transformation, and C is the capacitance value of the capacitor. $u_{Cd}$ and $u_{Cq}$ are obtained from the three-phase capacitor voltage ($u_{Ca}$, $u_{Cb}$ and $u_{Cc}$) through the dq rotational transformation.

Let $u'_{Cd} = (sL_v + R_v)i_{d1} + u_{Cd}$ and $u'_{Cq} = (sL_v + R_v)i_{q1} + u_{Cq}$. Here, $u'_{Cd}$ and $u'_{Cq}$ denote the voltage control quantity of the output voltage $u_C$ in the loop control. $u_{Cd}$ and $u_{Cq}$ are the voltage control quantity of $u_C$ in the loop control in case of current limiting control after the voltage drop of the virtual impedance is deducted, which may be understood as that the voltage drop of the virtual impedance needs to be deducted from the controlled voltage $u_C$ after current limiting of the virtual impedance is triggered, in order to achieve the purpose of current limiting.

Let $I_{dLim}$ and $I_{qLim}$ denote the maximum current limit value allowable in the circuit expressed in the dq rotary coordinate system, and then let:

$$u_{vd} = (sL_v + R_v)i_{d1} = (sL_v + R_v)i_{dLim} \qquad (7)$$

$$u_{vq} = (sL_v + R_v)i_{q1} = (sL_v + R_v)i_{qLim} \qquad (8)$$

Here, $u_{vd}$ and $u_{vq}$ denote the voltage drop of the virtual impedance in the dq rotary coordinate system.

The following equations are known.

$$I_d + jI_q = \frac{(u_d + ju_q) - (u_{cd} + ju_{cq})}{R + jX} \tag{9}$$

$$I_{dLim} + jI_{qLim} = \frac{(u_d + ju_q) - (u_{cd} + ju_{cq})}{(R + R_v) + j(X + X_v)} \tag{10}$$

Here, $I_d + jI_q$ (i.e., $i_{d2} + ji_{q2}$) denotes the output current value, and $I_{dLim} + jI_{qLim}$ denotes the current value after current limiting. $R$ and $X$ are the real impedance and inductive reactance parameters, such as the impedance and inductive reactance between $u_d$ and $u_{Cd}$. $j$ denotes the imaginary unit symbol. $i_{dLim}$ denotes the output current limit value on the d axis (i.e., the output current limit value on the first axis), and $i_{qLim}$ denotes the output current limit value on the q axis (i.e., the output current limit value on the second axis).

As can be obtained from the above equations (7) - (9), $u_{vd} = R(i_d - i_{dLim}) + X(i_{qLim} - i_q)$ and $u_{vq} = R(i_q - i_{qLim}) + X(i_d - i_{dLim})$. Since the resistance R in the actual circuit is very small and negligible, the above equations may be transformed to $u_{vd} = X(i_{qLim} - i_q)$ and $u_{vq} = X(i_d - i_{dLim})$. Since it is difficult to accurately acquire the final $i_d$ and $i_q$ after current limiting, the above equations are improved and then the following equations may be obtained.

$$u_{vd} = (i_{qLim} - i_q)(\frac{k_i + sk_p}{s}) \tag{11}$$

$$u_{vq} = (i_d - i_{dLim})(\frac{k_i + sk_p}{s}) \tag{12}$$

Here, $k_i$ denotes an integral coefficient, $k_p$ denotes a proportional coefficient, and s denotes an operator variable of the Laplace transformation. $i_d$ and $i_q$ denote the output current on the d axis (i.e., the output current on the first axis) and the output current on the q axis (i.e., the output current on the second axis) obtained from the three-phase output current $i_g$ through the dq rotational transformation.

According to equations (11) and (12), the overall control block diagram of the VSG is adjusted as shown in FIG. 2. As shown in FIG. 2, on the basis of the original double closed-loop control of the voltage outer loop and the current inner loop, a current limiting link of the virtual impedance is added, which may effectively limit the output current of the converter without changing the voltage loop characteristics. In order to reduce the influence of the current limiting link on the normal output current when current limiting is not triggered, an amplitude limiting process may be performed on equations (11) and (12). For example, in order to make the current limiting link have no effect on the normal output current when current limiting is not triggered, since $i_d$ and $i_q$ may be positive and negative, $i_{dLim}$ and $t_{qLim}$ are also set to be distinguished by positive and negative amplitude limiting, and the following equation (13) may be adopted.

$$\begin{cases} i_{qLim} \ is \ positive \ u_{vdMax} = 0 \ u_{vdMin} = -\infty, \ i_q > 0 \\ i_{qLim} \ is \ negative \ u_{vdMax} = +\infty \ u_{vdMin} = 0, \ i_q < 0 \\ i_{dLim} \ is \ positive \ u_{vqMax} = +\infty \ u_{vqMin} = 0, \ i_d > 0 \\ i_{dLim} \ is \ negative \ u_{vqMax} = 0 \ u_{vqMin} = -\infty, \ i_d < 0 \end{cases} \tag{13}$$

It is thus clear that in case of overcurrent, the amplitude of the output current may be limited within the amplitudes of $i_{dLim}$, $i_{qLim}$, $-i_{dLim}$ and $-i_{qLim}$ (depending on the direction of the current).

It is to be understood that the above process is a demonstration taking the following case as an example. The virtual impedance current limiting adjustment is performed on the output reference voltage on the first axis $U'_{c,dref}$ and the output reference voltage on the second axis $U'_{c,qref}$ by the output current limit value on the first axis $i_{dLim}$ and the output current limit value on the second axis $i_{qLim}$ of the preset maximum output current limit value of the converter. That is, the target output reference voltage on the first axis $U_{c,dref} = U'_{c,dref} - u_{vd}$, and the target output reference voltage on the second axis $U_{c,qref} = U'_{c,qref} - u_{vq}$ , such that the user may flexibly limit, according to actual conditions, the total output current by setting $i_{dLim}$ and $i_{qLim}$. Correspondingly, in the operation, the processor may also adjust the output reference voltage on the second axis $U'_{c,qref}$ or the output reference voltage on the first axis $U'_{c,dref}$ correspondingly by the output current limit value on the first axis $i_{dLim}$ or the output current limit value on the second axis $i_{qLim}$ to obtain the target output reference voltage on the first axis $U_{c,dref}$ and the target output reference voltage on the second axis $U_{c,qref}$ in the preset two-phase coordinate system, such that the user may independently limit the active current or the reactive current by setting $i_{dLim}$ and $i_{qLim}$. When the output reference voltage on the second axis $U_{c,qref}$ is not adjusted, the output reference voltage on the second axis $U'_{c,dref}$ may be determined as the target output reference voltage on the second axis $U_{c,qref}$.

In other words, in the operation, the processor may determine, through a proportional integral control link, a voltage adjustment value on the first axis according to the output current limit value on the second axis and the output current on the second axis; and adjust, by using the voltage adjustment value on the first axis, the output reference voltage on the first axis to obtain the target output reference voltage on the first axis. And/or, the processor may determine, through the proportional integral control link, a voltage adjustment value on the second axis according to the output current limit value on the first axis and the output current on the first axis; and adjust, by using the voltage adjustment value on the second axis, the output reference voltage on the second axis to obtain the target output reference voltage on the second axis. Here, the output current on the second axis and the output current on the first axis are obtained by transforming the three-phase output current of the converter into the preset two-phase coordinate system. The output current on the first axis is an active current, and the output current on the second axis is a reactive current.

Correspondingly, the above operation that through the proportional integral control link, the voltage adjustment value on the first axis is determined according to the output current limit value on the second axis and the output current on the second axis may include the following operations. The voltage adjustment value on the first axis is calculated through the above equation (11) or through adding a calculation formula of the weight parameter to equation (11). Here, $u_{vd}$ denotes the voltage adjustment value on the first axis, $i_{qLim}$ denotes the output current limit value on the second axis, and $i_q$ denotes the output current on the second axis. $k_i$ denotes the integral coefficient, $k_p$ denotes the proportional coefficient, and s denotes the operator variable of the Laplace transformation. $i_{qLim}$ is positive if $i_q > 0$ , and $i_{qLim}$ is negative if $i_q < 0$ . If $i_q > 0$ , the voltage adjustment value on the first axis is adjusted to a first threshold when the voltage adjustment value on the first axis is greater than the first threshold, and the voltage adjustment value on the first axis is not adjusted when the voltage adjustment value on the first axis is not greater than the first threshold. If $i_q < 0$ , the voltage adjustment value on the first axis is adjusted to a second threshold when the voltage adjustment value on the first axis is less than the second threshold, and the voltage adjustment value on the first axis is not adjusted when the voltage adjustment value on the first axis is not less than the second threshold.

The above operation that through the proportional integral control link, the voltage adjustment value on the second axis is determined according to the output current limit value on the first axis and the output current on the first axis may include the following operations. The voltage adjustment value on the second axis is calculated through the above equation (12) or through adding the calculation formula of the weight parameter to equation (12). Here, $u_{vq}$ denotes the voltage adjustment value on the second axis, $i_{dLim}$ denotes the output current limit value on the first axis, and $i_d$ denotes the output current on the first axis. $i_{dLim}$ is positive if $i_d > 0$, and $i_{dLim}$ is negative if $i_d < 0$ . If $i_d > 0$, the voltage adjustment value on the second axis is adjusted to a third threshold when the voltage adjustment value on the second axis is greater than the third threshold, and the voltage adjustment value on the second axis is not adjusted when the voltage adjustment value on the second axis is not greater than the third threshold. If $i_d < 0$, the voltage adjustment value on the second axis is adjusted to a fourth threshold when the voltage adjustment value on the second axis is less than the fourth threshold, and the voltage adjustment value on the second axis is not adjusted when the voltage adjustment value on the second axis is not less than the fourth threshold.

Correspondingly, specific values of the above first threshold to fourth threshold, i.e., the influence of the current limiting link on the normal output current when current limiting is not triggered, may be set by the designer or the user according to practical scenarios and user requirements. As shown in equation (13), each of the first threshold to the fourth threshold may be 0. The first threshold to the fourth threshold may also be set to other values, which is not limited by the embodiment.

In operation 104, the three-phase target output voltage of the converter is acquired according to the target output reference voltage on the first axis and the target output reference voltage on the second axis.

It is to be understood that in the embodiment, the processor may determine the three-phase target output voltage of the converter at the next time according to the target output reference voltage on the first axis and the target output reference voltage on the second axis, so as to correspondingly control the controllable switch in the converter to adjust the three-phase voltage subsequently output by the converter.

Correspondingly, the specific manner for the processor to acquire the three-phase target output voltage of the converter according to the target output reference voltage on the first axis and the target output reference voltage on the second axis in the operation may be set by the designer according to practical scenarios and user requirements. For example, the processor may directly transform the target output reference voltage on the first axis and the target output reference voltage on the second axis to the three-phase target output voltage. The processor may also obtain, through the double closed-loop control of the voltage outer loop and the current inner loop, the target output voltage on the first axis and the target output voltage on the second axis in the preset two-phase coordinate system according to the target output reference voltage on the first axis and the target output reference voltage on the second axis, and then transform the target output voltage on the first axis and the target output voltage on the second axis to the three-phase target output voltage. As shown in FIG. 2, the target output reference voltage on the first axis $U_{c,dref}$ and the target output reference voltage on the second axis $U_{c,qref}$ may be processed through the dq transformation and the double closed-loop control of the voltage outer loop and the current inner loop, and the three-phase voltage used for the PWM control (i.e., the three-phase target output voltage) is obtained. In FIG. 2, $I_{in,d}$ and $I_{in,q}$ are obtained from $i_{in}$ through the dq transformation, $I_{g,d}$ and $I_{g,q}$ are obtained from the output current $i_g$ (i.e., $i_{a1}$, $i_{b1}$ and $i_{c1}$) through the dq transformation, and $U_{c,d}$ and $U_{c,q}$ are obtained from the three-phase capacitor voltage $u_{Cabc}$ through the dq transformation. $i_{in}$ is the three-phase filtering inductor current. The embodiment makes no limitation thereon.

In the embodiment of the disclosure, by using the preset maximum output current limit value of the converter, the virtual impedance current limiting adjustment is performed on the output reference voltage on the first axis and/or the output reference voltage on the second axis, to obtain at least one of the target output reference voltage on the first axis or the target output reference voltage on the second axis in the preset two-phase coordinate system. The output current of the grid-forming converter may be limited by the virtual impedance control technology, such that the converter may still maintain the voltage source characteristics after current limiting, which improves stability of the converter while ensuring safe operation of the converter.

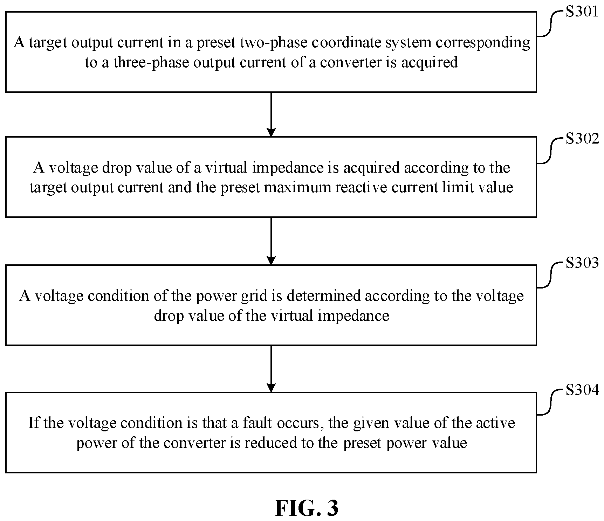

Please refer to FIG. 3, which is a flowchart of a current limiting control method for a grid-forming converter provided by at least one embodiment of the disclosure. The current limiting control method includes the following operations.

In operation 301, a target output current in a preset two-phase coordinate system corresponding to a three-phase output current of a converter is acquired.

Here, the target output current is an output current on the second axis in the preset two-phase coordinate system, and the target output current is related to a reactive current of the converter. The output end of the converter is connected to the power grid. The output current limit value on the second axis mentioned in the embodiments of FIG. 1 and FIG. 2 are taken as a preset maximum reactive current limit value.

It is to be understood that the converter in the embodiment may be a converter connected to the power grid (i.e., the grid-forming converter), that is, the output end of the converter may be connected to the power grid. The current limiting control method for the grid-forming converter provided by the embodiment may be applied to a control process of a grid-connected inverter, for example, a control process of a VSG of the inverter. That is, the grid-connected inverter may limit the given value of the active power of the VSG control by the method provided by the embodiment in case that the power grid voltage fails, and then correspondingly adjust the output phase of the VSG control, so as to reduce the output current of the converter and achieve stable ride-through of the power grid voltage fault. The current limiting control method for the grid-forming converter provided by the embodiment may also be applied to other control processes of the grid-connected inverter, or a control process of a grid-connected AC converter, for example, a control scenario of an inverter of a UPS. The power grid voltage fault may be detected by the virtual impedance control technology, and in case that the power grid voltage fails, the output current of the converter is reduced by limiting the active power, so as to achieve stable ride-through of the power grid voltage fault. The embodiment makes no limitation thereon.

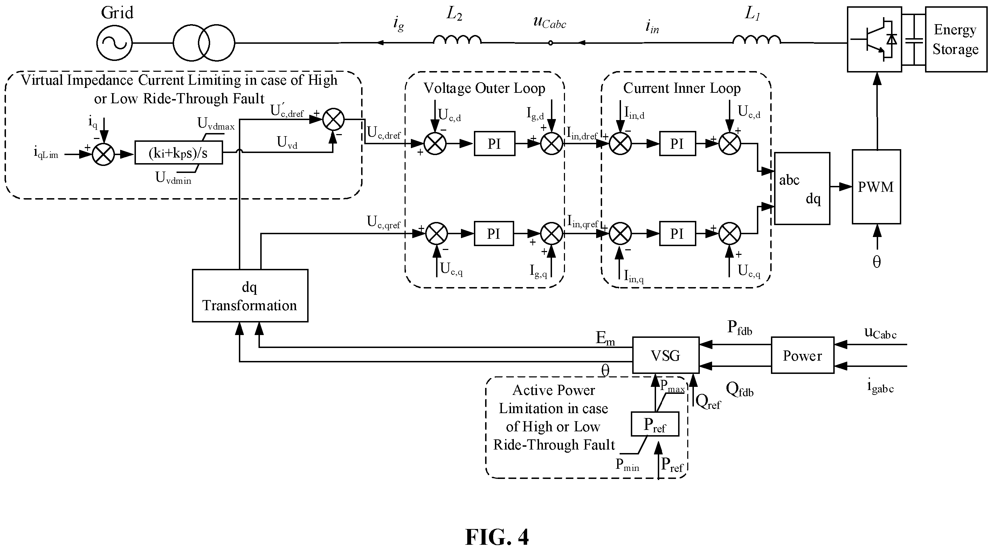

Here, the output end of the converter in the embodiment may be connected to the power grid, that is, the converter may be the grid-forming converter connected to the power grid. The three-phase output current of the converter in the embodiment may be a current output by a voltage source converter (i.e., the three-phase current), that is, the collected output current of the converter at the current time, such as the current $i_g$ output through the filtering inductor $L_1$ of the inverter and the output filtering inductor $L_2$ of the inverter shown in FIG. 4. The target output current in the embodiment may be a current value on an axis related to the reactive current of the converter, of the corresponding current values on the two axes (i.e., the first axis and the second axis) in the preset two-phase coordinate system (i.e., the output current on the first axis and the output current on the second axis), which is obtained from the three-phase output current through a rotational transformation.

Correspondingly, the specific type of the preset two-phase coordinate system in the embodiment, i.e., the rotational transformation manner of the three-phase output reference voltage, may be set by the designer according to practical scenarios and user requirements. For example, the preset two-phase coordinate system may be a dq rotary coordinate system. That is, the processor may perform a dq transformation on the three-phase output reference voltage to obtain an output current on the d axis (i.e., the output current on the first axis) and an output current on the q axis (i.e., the output current on the second axis), and determine the output current on the q axis related to the reactive current (e.g. $i_q$ in FIG. 4) as the target output current. The preset two-phase coordinate system may also be other rotary coordinate systems such as an $\alpha\beta$ rotary coordinate system. If the preset two-phase coordinate system is the $\alpha\beta$ rotary coordinate system, the processor may perform an $\alpha\beta$ transformation on the three-phase output reference voltage to obtain an output current on the $\alpha$ axis (i.e., the output current on the first axis) and an output current on the $\beta$ axis (i.e., the output current on the second axis), and determine the output current on the $\alpha$ axis or the output current on the $\beta$ axis related to the reactive current as the target output current. The embodiment makes no limitation thereon.

In operation 302, a voltage drop value of a virtual impedance is acquired according to the target output current and the preset maximum reactive current limit value. The voltage drop value of the virtual impedance is the voltage adjustment value on the first axis mentioned in the embodiments of FIG. 1 and FIG. 2.

Here, the preset maximum reactive current limit value in the embodiment may be a limit value preset for limiting the maximum amplitude of the reactive current of the inverter, for example, a limit value limiting the maximum amplitude of the target output current. Since the target output current is related to the reactive current, the preset maximum reactive current limit value may be set as the amplitude of the target output current is less than or equal to the amplitude of the preset maximum reactive current limit value, so as to achieve limitation on the maximum amplitude of the reactive current.

That is to say, in the embodiment, by the virtual impedance control technology, the voltage drop on the virtual impedance may be calculated according to the target output current and the preset maximum reactive current limit value, for detecting the voltage condition of the power grid. In this way, when the detected voltage condition is that a fault occurs, the given value of the active power of the converter is reduced to a preset power value, so as to achieve the purpose of stable ride-through of the voltage fault.

For example, as shown in FIG. 4 and FIG. 5, in case that the method provided by the embodiment is applied to the VSG control of the inverter, the topology of the control circuit, after the virtual impedance is added, is changed to the form of FIG. 5. The virtual impedance $Z_v$ is added, and $Z_v = \sqrt{R_v^2 + X_v^2}$ . Here, $R_v$ denotes the impedance of the virtual resistance, and $X_v$ denotes the inductive reactance of the virtual inductor.

According to the KVL (Kirchhoff's law), the relationship of the power grid voltages ($e_a$, $e_b$ and $e_c$), the output voltages of the converter ($u_{Ca}$, $u_{Cb}$ and $u_{Cc}$) and the output currents of the converter ($i_{a2}$, $i_{b2}$ and $i_{c2}$, i.e., the three-phase output current $i_g$) may be obtained as follows.

$$\begin{bmatrix} u_a \\ u_b \\ u_c \end{bmatrix} = R_1 \begin{bmatrix} i_{a1} \\ i_{b1} \\ i_{c1} \end{bmatrix} + L_1 \frac{d}{dt} \begin{bmatrix} i_{a1} \\ i_{b1} \\ i_{c1} \end{bmatrix} + R_v \begin{bmatrix} i_{a1} \\ i_{b1} \\ i_{c1} \end{bmatrix} + L_v \frac{d}{dt} \begin{bmatrix} i_{a1} \\ i_{b1} \\ i_{c1} \end{bmatrix} + \begin{bmatrix} u_{Ca} \\ u_{Cb} \\ u_{Cc} \end{bmatrix} \qquad (1')$$

$$\begin{bmatrix} u_{Ca} \\ u_{Cb} \\ u_{Cc} \end{bmatrix} = R_2 \begin{bmatrix} i_{a2} \\ i_{b2} \\ i_{c2} \end{bmatrix} + L_2 \frac{d}{dt} \begin{bmatrix} i_{a2} \\ i_{b2} \\ i_{c2} \end{bmatrix} + \begin{bmatrix} e_a \\ e_b \\ e_c \end{bmatrix} \qquad (2')$$

$$C \frac{d}{dt} \begin{bmatrix} u_{Ca} \\ u_{Cb} \\ u_{Cc} \end{bmatrix} = \begin{bmatrix} i_{a1} \\ i_{b1} \\ i_{c1} \end{bmatrix} - \begin{bmatrix} i_{a2} \\ i_{b2} \\ i_{c2} \end{bmatrix} \qquad (3')$$

In equations (1') - (3'), $R_1$ denotes the resistance impedance on the bridge arm side, $L_1$ denotes the filtering inductor of the converter, $i_{a1}$, $i_{b1}$ and $i_{c1}$ denote the three-phase filtering inductor current, $R_2$ denotes the output resistance impedance of the converter, $L_2$ denotes the output filtering inductor of the converter, $L_v$ denotes the virtual inductor, and $u_a$, $u_b$ and $u_c$ denote the output three-phase voltage. When the dq rotary coordinate system is adopted for the preset two-phase coordinate system, the three-phase coordinate system is transformed to the dq rotary coordinate system, and the following equations may be obtained by further simplification.

$$\begin{bmatrix} u_d \\ u_q \end{bmatrix} = R_1 \begin{bmatrix} i_{d1} \\ i_{q1} \end{bmatrix} + \omega L_1 \begin{bmatrix} 0 & -1 \\ 1 & 0 \end{bmatrix} \begin{bmatrix} i_{d1} \\ i_{q1} \end{bmatrix} + L_1 \frac{d}{dt} \begin{bmatrix} i_{d1} \\ i_{q1} \end{bmatrix} + R_v \begin{bmatrix} i_{d1} \\ i_{q1} \end{bmatrix} + \omega L_v \begin{bmatrix} 0 & -1 \\ 1 & 0 \end{bmatrix} \begin{bmatrix} i_{d1} \\ i_{q1} \end{bmatrix} + L_v \frac{d}{dt} \begin{bmatrix} i_{d1} \\ i_{q1} \end{bmatrix} + \begin{bmatrix} u_{Cd} \\ u_{Cq} \end{bmatrix}$$

$$(4')$$

$$\begin{bmatrix} u_{Cd} \\ u_{Cq} \end{bmatrix} = R_2 \begin{bmatrix} i_{d2} \\ i_{q2} \end{bmatrix} + \omega L_2 \begin{bmatrix} 0 & -1 \\ 1 & 0 \end{bmatrix} \begin{bmatrix} i_{d2} \\ i_{q2} \end{bmatrix} + L_2 \frac{d}{dt} \begin{bmatrix} i_{d2} \\ i_{q2} \end{bmatrix} + \begin{bmatrix} e_d \\ e_q \end{bmatrix} \qquad (5')$$

$$\omega C \begin{bmatrix} 0 & -1 \\ 1 & 0 \end{bmatrix} \begin{bmatrix} u_{Cd} \\ u_{Cq} \end{bmatrix} + C \frac{d}{dt} \begin{bmatrix} u_{Cd} \\ u_{Cq} \end{bmatrix} = \begin{bmatrix} i_{d1} \\ i_{q1} \end{bmatrix} - \begin{bmatrix} i_{d2} \\ i_{q2} \end{bmatrix} \qquad (6')$$

In equations (4') - (6'), $u_d$ and $u_q$ may be obtained from $u_a$, $u_b$ and $u_c$ through the dq rotational transformation. $i_{d1}$ and $i_{q1}$ may be obtained from $i_{a1}$, $i_{b1}$ and $i_{c1}$ through the dq rotational transformation. $u_{Cd}$ and $u_{Cq}$ may be obtained from $u_{Ca}$, $u_{Cb}$ and $u_{Cc}$ through the dq rotational transformation. $i_{d2}$ and $i_{q2}$ may be obtained from $i_{a2}$, $i_{b2}$ and $i_{c2}$ through the dq rotational transformation. $e_d$ and $e_q$ may be obtained from $e_a$, $e_b$ and $e_c$ through the dq rotational transformation. $\omega$ =2*pi*f, here, pi denotes $\pi$, and f denotes the rated frequency of the inductor.

Then the following equations may be obtained. $u_d = (sL_1 + R_1 + sL_v + R_v)i_{d1}$ - $\omega L_1 i_{q1}$ - $\omega L_v i_{q1} + u_{Cd}$, $u_q = (sL_1 + R_1 + sL_v + R_v)i_{q1} + \omega L_1 i_{d1} + \omega L_v i_{d1} + u_{Cq}$, $u_{Cd} = (sL_2 + R_2)i_{d2}$ - $\omega L_2 i_{q2} + e_d$, $u_{Cq} = (sL_2 + R_2)i_{q2} + \omega L_2 i_{d2} + e_q$, $sC u_{Cd}$ - $\omega C u_{Cq} = i_{d1}$ - $i_{d2}$, and $sC u_{Cq} + \omega C u_{Cq} = i_{q1} - i_{q2}$. $s$ denotes the operator variable of the Laplace transformation, and C is the capacitance value of the capacitor. $u_{Cd}$ and $u_{Cq}$ are obtained from the three-phase capacitor voltage ($u_{Ca}$, $u_{Cb}$ and $u_{Cc}$) through the dq rotational transformation.

Let $u'_{Cd} = (sL_v + R_v)i_{d1} + u_{Cd}$ and $u'_{Cq} = (sL_v + R_v)i_{q1} + u_{Cq}$. Here, $u'_{Cd}$ and $u'_{Cq}$ denote the voltage control quantity of the output voltage $u_C$ in the loop control. $u_{Cd}$ and $u_{Cq}$ may be the voltage control quantity of $u_C$ in the loop control in case of current limiting control after the voltage drop of the virtual impedance is deducted, which may be understood as that the corresponding voltage drop of the virtual impedance may be deducted from the controlled voltage $u_C$ after current limiting of the virtual impedance is triggered, in order to achieve the purpose of current limiting.

Let $I_{dLim}$ and $I_{qLim}$ denote the maximum current limit value allowable in the circuit expressed in the dq rotary coordinate system, and then let:

$$u_{vd} = (sL_v + R_v)i_{d1} = (sL_v + R_v)i_{dLim} \qquad (7')$$

$$u_{vq} = (sL_v + R_v)i_{q1} = (sL_v + R_v)i_{qLim} \qquad (8')$$

Here, $u_{vd}$ and $u_{vq}$ denote the voltage drop of the virtual impedance in the dq rotary coordinate system, i.e., the voltage drop of the virtual impedance on the d axis and the voltage drop of the virtual impedance on the q axis.

The following equations are known.

$$I_d + jI_q = \frac{(u_d + ju_q) - (u_{cd} + ju_{cq})}{R + jX} \qquad (9')$$

$$I_{dLim} + jI_{qLim} = \frac{(u_d + ju_q) - (u_{cd} + ju_{cq})}{(R + R_v) + j(X + X_v)} \qquad (10')$$

Here, $I_d + jI_q$ (i.e., $i_{d2} + ji_{q2}$) denotes the output current value, and $I_{dLim} + jJ_{qLim}$ denotes the current value after current limiting. $R$ and $X$ are the real impedance and inductive reactance parameters, such as the impedance and inductive reactance between $u_d$ and $u_{Cd}$. $j$ denotes the imaginary unit symbol. $i_{dLim}$ denotes the output current limit value on the d axis, and $t_{qLim}$ denotes the output current limit value on the q axis.

As can be obtained from the above equations (7') - (9'), $u_{vd}$ $R(i_d$ - $i_{dLim}) + X(i_{qLim}$ - $i_q)$ and $u_{vq} = R(i_q + X(i_d$ - $i_{dLim})$. Since the resistance R in the actual circuit is very small and negligible, the above equations may be transformed to $u_{vd} = X$

$(i_{qLim} - i_q)$ and $u_{vq} = X(i_d - i_{dLim})$. Since it is difficult to accurately acquire the final $i_d$ and $i_q$ after current limiting, the above equations are improved and then the following equations may be obtained.

$$u_{vd} = (i_{qLim} - i_q)(\frac{k_i + sk_p}{s}) \qquad (11')$$

$$u_{vq} = (i_d - i_{dLim})(\frac{k_i + sk_p}{s}) \qquad (12')$$

Here, $k_i$ denotes an integral coefficient, $k_p$ denotes a proportional coefficient, and s denotes an operator variable of the Laplace transformation. $i_d$ and $i_q$ denote the output current on the d axis (i.e., the output current on the first axis) and the output current on the q axis (i.e., the output current on the second axis) obtained from the three-phase output current $i_g$ through the dq rotational transformation.

When the remote voltage drops, according to the following equation (13'), the same active power requires a larger power angle. In such case, without limitation imposed, it is easy to cause instability of the power angle, which results in cutting machine and makes the inverter off the grid.

$$P_A = \frac{V_A}{R_e{}^2 + X_e{}^2}\left[ R_e\left(V_A - V_B \cos\delta\right) + X_e V_B \sin\delta \right] \qquad (13')$$

In equation (13'), $V_A$ is the voltage at the machine end, and $V_B$ is the voltage at the remote end. $Q_A$ is the reactive power, and $\delta$ is the power angle. $R_e$ and $X_e$ are the impedance and inductive reactance of the power grid, i.e., the impedance and inductive reactance between $V_A$ and $V_B$. In order to avoid such case, in the embodiment, whether the power grid voltage fails may be judged by the voltage drop of the virtual impedance on the d axis (the voltage drop value of the virtual impedance). If the fault state is triggered, the given value of the active power is reduced to the preset power value (such as 0), so as to achieve the purpose of stable ride-through of the voltage fault.

Further, as shown in the following equation (14'), when the remote voltage drops, the reactive power will increase abruptly, which causes overcurrent of the reactive current and results in instability.

$$Q_A = \frac{V_A}{R_e{}^2 + X_e{}^2}\left[ -R_e V_B \sin\delta + X_e\left(V_A - V_B \cos\delta\right) \right] \qquad (14')$$

Therefore, in the embodiment, an amplitude limiting processing may also be performed on $i_q$ related to the reactive current of the converter according to the above equation (11'). As shown in FIG. 4, on the basis of the original double closed-loop control of the voltage outer loop and the current inner loop, a current limiting link of the virtual impedance is added, which may effectively limit the output current of the inverter without changing the voltage loop characteristics. In order to reduce the influence of the current limiting link on the normal output current when current limiting is not triggered, the amplitude limiting processing may be performed on equation (11'). For example, in order to make the current limiting link have no effect on the normal output current when current limiting is not triggered, since $i_q$ may be positive and negative, $i_{qLim}$ may also be set to be distinguished by positive and negative amplitude limiting, and the following equation (15') may be adopted.

$$\begin{cases} i_{qLim} \ is \ positive \ u_{vdMax} = 0 \ u_{vdMin} = -\infty, \ i_q > 0 \\ i_{qLim} \ is \ negative \ u_{vdMax} = +\infty \ u_{vdMin} = 0, \ i_q < 0 \end{cases} \qquad (15')$$

It is thus clear that in case of overcurrent, the reactive current may be limited within the amplitudes of $i_{qLim}$ and -$i_{qLim}$ (depending on whether high or low ride-through is triggered).

Correspondingly, the above process of adjusting the given value of the active power according to the voltage drop of the virtual impedance on the d axis (the voltage drop value of the virtual impedance) may be achieved through if($u_{vd}! = 0$): $P_{Min} = P_{Max} = 0$. Here, $P_{Min}$ and $P_{Max}$ respectively denote the lower limit value and upper limit value of the given value of the active power $P_{ref}$. That is to say, when the voltage drop of the virtual impedance on the d axis (i.e., the voltage drop value of the virtual impedance related to the reactive power) is not 0 (i.e., a current limiting threshold, here, each of the first and second thresholds mentioned in the embodiments of FIG. 1 and FIG. 2 is the current limiting threshold), it is determined that the power grid voltage fails. By setting each of the lower limit value $P_{Min}$ and the upper limit value $P_{Max}$ of the given value of the active power $P_{ref}$ to 0, the given value of the active power $P_{ref}$ may be reduced to 0 (i.e., the preset power value), which ensures that the power angle is stable. The active power is recovered at the same time when the fault is recovered.

It is to be understood that the specific manner for the processor to acquire the voltage drop value of the virtual impedance according to the target output current and the preset maximum reactive current limit value in the operation may be set by the designer according to usage scenarios and user requirements. For example, the processor may determine, through the proportional integral control link, the voltage drop value of the virtual impedance according to the target output current and the preset maximum reactive current limit value. For example, as shown in the above equation (11'), the

$$u_{vd} = (i_{qLim} - i_q)(\frac{k_i + sk_p}{s})$$

processor may calculate the voltage drop value of the virtual impedance through   . Here, $u_{vd}$ denotes the voltage drop value of the virtual impedance, $i_{qLim}$ denotes the preset maximum reactive current limit value, and $i_q$ denotes the target output current. $k_i$ denotes the integral coefficient, $k_p$ denotes the proportional coefficient, and s denotes the operator variable of the Laplace transformation. $i_{qLim}$ is positive if $i_q > 0$, and $i_{qLim}$ is negative if $i_q < 0$.

Correspondingly, the processor may further adjust the calculated voltage drop value of the virtual impedance to reduce the influence of the added current limiting link of the virtual impedance on the normal reactive current when current limiting is not triggered. For example, in case that $i_q > 0$, the processor may adjust the voltage drop value of the virtual impedance to the current limiting threshold when the voltage drop value of the virtual impedance is greater than the current limiting threshold, and does not adjust the voltage drop value of the virtual impedance when the voltage drop value of the virtual impedance is not greater than the current limiting threshold. In case that $i_q < 0$, the processor may adjust the voltage drop value of the virtual impedance to the current limiting threshold when the voltage drop value of the virtual impedance is less than the current limiting threshold, and does not adjust the voltage drop value of the virtual impedance when the voltage drop value of the virtual impedance is not less than the current limiting threshold. The specific value of the current limiting threshold may be set by the designer or the user. As shown in the above equation (15'), the current limiting threshold may be set to 0, such that the current limiting link of the virtual impedance has no influence on the normal reactive current when current limiting is not triggered. The current limiting threshold may also be set to other values. The embodiment makes no limitation thereon.

Further, in the embodiment, the output current of the converter may further be limited without changing the voltage source characteristics by the virtual impedance technology. For example, the processor may adjust the target output reference voltage by the voltage drop value of the virtual impedance to obtain the adjusted target output reference voltage; and acquire the three-phase target output voltage of the converter according to a non-target output reference voltage and the adjusted target output reference voltage. Here, the target output reference voltage is the output reference voltage on the first axis or the output reference voltage on the second axis in the preset two-phase coordinate system obtained by transforming the three-phase output reference voltage of the converter, and the target output reference voltage is related to the reactive power of the converter. The output reference voltage on the first axis mentioned in the embodiments of FIG. 1 and FIG. 2 is the target output reference voltage. The non-target output reference voltage is the output reference voltage on the other axis other than the target output reference voltage in the preset two-phase coordinate system obtained by transforming the three-phase output reference voltage. The output reference voltage on the second axis mentioned in the embodiments of FIG. 1 and FIG. 2 is the non-target output reference voltage.

Here, the above three-phase output reference voltage may be a three-phase reference voltage needed to be used to obtain the three-phase output voltage target (i.e., the three-phase target output voltage) of the converter. For example, the three-phase reference voltage of the VSG (e.g. the reference voltage of the three-phase capacitor voltage $u_{Cabc}$ between the filtering inductor $L_1$ of the inverter and the output filtering inductor $L_2$ of the inverter in FIG. 4), or a three-phase voltage corresponding to the phase output in the phase-locked link of the UPS. The specific manner of acquiring the three-phase output reference voltage is not limited by the embodiment. For example, it may be achieved in a manner the same as or similar to the calculation method of the reference value of the three-phase output voltage of the converter control in the related art. For example, when applied to the VSG control, as shown in FIG. 4, the processor may calculate the active power $P_{fdb}$ and the reactive power $Q_{fdb}$ according to the collected three-phase capacitor voltage $u_{Cabc}$ and three-phase output current $i_g$ ($i_{gabc}$); determine the target output voltage phase $\theta$ and the electromotive force $E_m$ according to the active power $P_{fdb}$, the reactive power $Q_{fdb}$, the active power reference value $P_{ref}$ and the reactive power reference value $Q_{ref}$; and obtain the three-phase output reference voltage, such as the given voltage of the voltage outer loop, according to the target output voltage phase $\theta$ and the electromotive force $E_m$. Correspondingly, when applied to the UPS control, a process similar to the phase-locked link of the conventional UPS may be adopted for processing, so as to calculate the three-phase output reference voltage by the phase output in the phase-locked link. The embodiment makes no limitation thereon.

Correspondingly, the processor may perform the rotational transformation on the three-phase target output voltage of the converter to obtain the output reference voltages on the two axes in the preset two-phase coordinate system; determine the output reference voltage on one axis related to the reactive power of the converter as the target output reference voltage, and determine the output reference voltage on the other axis as the non-target output reference voltage; and adjust the target output reference voltage by the voltage drop value of the virtual impedance to obtain the adjusted target output reference voltage. For example, the difference between the target output reference voltage and the voltage drop value of the virtual impedance is calculated to obtain the adjusted target output reference voltage. As shown in FIG. 4, when the preset two-phase coordinate system is the dq rotary coordinate system, the processor may perform the dq transformation on the three-phase output reference voltage to obtain the output reference voltage on the d axis $U'_{c,dref}$ related to the reactive power of the converter (i.e., the target output reference voltage) and the output reference voltage on the q axis $U_{c,qref}$ (i.e., the non-target output reference voltage). The difference between the output reference voltage on the d axis $U'_{c,dref}$ and the voltage drop value of the virtual impedance $u_{vd}$ is calculated to obtain the adjusted target output reference voltage $U_{c,dref}$.

Correspondingly, the specific manner for the above process of acquiring the three-phase target output voltage of the converter according to the non-target output reference voltage and the adjusted target output reference voltage may be set by the designer according to practical scenarios and user requirements. For example, the processor may directly transform the non-target output reference voltage and the adjusted target output reference voltage to the three-phase target output voltage. The processor may also obtain, through the double closed-loop control of the voltage outer loop and the current inner loop, the target output voltage on the first axis and the target output voltage on the second axis in the preset two-phase coordinate system according to the non-target output reference voltage and the adjusted target output reference voltage, and then transform the target output voltage on the first axis and the target output voltage on the second axis to the three-phase target output voltage. As shown in FIG. 4, the adjusted target output reference voltage $U_{c,dref}$ and the non-target output reference voltage $U_{c,qref}$ may be processed through the dq transformation and the double closed-loop control of the voltage outer loop and the current inner loop, and the three-phase voltage used for the PWM control (i.e., the three-phase target output voltage) is obtained. In FIG. 4, $L_1$ is the filtering inductor of the inverter and $L_2$ is the output filtering inductor of the inverter. $I_{in,d}$ and $I_{in,q}$ are obtained from $i_{in}$ through the dq transformation, $I_{g,d}$ and $I_{g,d}$ are obtained from the output current $i_g$ (i.e., $i_{a1}$, $i_{b1}$ and $i_{c1}$) through the dq transformation, and $U_{c,d}$ and $U_{c,q}$ are obtained from the three-phase capacitor voltage $u_{Cabc}$ through the dq transformation. $i_{in}$ is the three-phase filtering inductor current. The embodiment makes no limitation thereon.

In operation 303, a voltage condition of the power grid is determined according to the voltage drop value of the virtual impedance.

It is to be understood that the power grid voltage fault (such as the high or low ride-through fault) can not be detected accurately in time by the conventional solution of detecting the voltage condition of the power grid through the amplitude of the voltage. For example, the function of the VSG is to output reactive power to support the amplitude of the voltage to be stable and does not drop, which will lead to a serious delay or even failure in the conventional solution of detecting the power grid voltage fault through the amplitude of the voltage. Therefore, in the operation, the processor may determine the voltage condition of the power grid connected to the output end of the converter according to the acquired voltage drop value of the virtual impedance, i.e., detect whether the power grid fails, so as to ensure accuracy and timeliness of the detection of the power grid voltage fault.

Correspondingly, the specific manner for determining the voltage condition of the power grid according to the voltage drop value of the virtual impedance in the operation may be set by the designer according to practical scenarios and user requirements. For example, in case that the target output current $i_q > 0$, the processor may determine that the voltage condition of the power grid is that a fault occurs when the voltage drop value of the virtual impedance is greater than the current limiting threshold. In case that $i_q < 0$, the processor may determine that the voltage condition of the power grid is that a fault occurs when the voltage drop value of the virtual impedance is less than the current limiting threshold. Otherwise, the processor may determine that the voltage condition of the power grid is that no fault occurs. Correspondingly, in case that the added current limiting link of the virtual impedance limits the voltage drop value of the virtual impedance to the current limiting threshold (such as 0) when current limiting is not triggered, the processor may also determine that the voltage condition of the power grid is that a fault occurs when the voltage drop value of the virtual impedance is not the current limiting threshold, and determine that the voltage condition of the power grid is that no fault occurs when the voltage drop value of the virtual impedance is the current limiting threshold. The embodiment makes no limitation thereon.

In operation 304, if the voltage condition is that a fault occurs, the given value of the active power of the converter is reduced to the preset power value.

Here, in the operation, when it is determined that the voltage condition of the power grid is that a fault occurs (such as a voltage drop), the processor may reduce the given value of the active power of the converter to the preset power value, so as to achieve the purpose of stable ride-through of the voltage fault.

Correspondingly, the embodiment does not limit the specific value of the preset power value. For example, the given value of the active power may be 0 or other smaller power values, as long as it is ensured that the preset power value is lower than the given value of the active power of the converter when the power grid voltage is normal, so as to achieve ride-through of the power grid voltage fault. The embodiment makes no limitation thereon.

In the embodiment of the disclosure, the voltage drop value of the virtual impedance is acquired according to the target output current and the preset maximum reactive current limit value, which may detect the power grid voltage fault by the virtual impedance control technology, and improve accuracy and timeliness of the detection of the power grid voltage fault. Therefore, in case that the power grid voltage fails, the output current of the converter is reduced by limiting the active power to avoid instability of the power angle, so as to achieve stable ride-through of the power grid voltage fault.

Corresponding to the above method embodiments, an embodiment of the disclosure further provides a current limiting control apparatus for a grid-forming converter. The current limiting control apparatus for the grid-forming converter described below and the current limiting control method for the grid-forming converter described above may be referred to each other.

Please refer to FIG. 6, which is a block diagram of a structure of a current limiting control apparatus for a grid-forming converter provided by an embodiment of the disclosure. The apparatus may include a reference acquisition module 10, a coordinate transformation module 20, a current limiting adjustment module 30, and a reference control module 40.

The reference acquisition module 10 is configured to acquire a three-phase output reference voltage of a converter. The output end of the converter is connected to the power grid.

The coordinate transformation module 20 is configured to perform a transformation to obtain an output reference voltage on a first axis and an output reference voltage on a second axis in a preset two-phase coordinate system corresponding to the three-phase output reference voltage.

The current limiting adjustment module 30 is configured to perform, by using a preset maximum output current limit value of the converter, virtual impedance current limiting adjustment on the output reference voltage on the first axis and/or the output reference voltage on the second axis, to obtain an target output reference voltage on the first axis and an target output reference voltage on the second axis in the preset two-phase coordinate system. The preset maximum output current limit value includes : an output current limit value on the second axis corresponding to the output reference voltage on the first axis, and/or an output current limit value on the first axis corresponding to the output reference voltage on the second axis.

The reference control module 40 is configured to acquire a three-phase target output voltage of the converter according to the target output reference voltage on the first axis and the target output reference voltage on the second axis.

In some embodiments, the converter is an inverter, and the three-phase output reference voltage is a three-phase reference voltage of a VSG.

In some embodiments, the preset two-phase coordinate system is a dq rotary coordinate system.

In some embodiments, the reference control module 40 may include a double-loop control sub-module and a coordinate transformation sub-module.

The double-loop control sub-module is configured to obtain, through a double closed-loop control of an voltage outer loop and an current inner loop, a target output voltage on the first axis and a target output voltage on the second axis in the preset two-phase coordinate system according to the target output reference voltage on the first axis and the target output reference voltage on the second axis.

The coordinate transformation sub-module is configured to transform the target output voltage on the first axis and the target output voltage on the second axis to the three-phase target output voltage.

In some embodiments, the current limiting adjustment module 30 may include at least one of a first axis adjustment sub-module or a second axis adjustment sub-module.

The first axis adjustment sub-module is configured to determine, through a proportional integral control link, a voltage adjustment value on the first axis according to the output current limit value on the second axis and an output current on the second axis; and adjust, by using the voltage adjustment value on the first axis, the output reference voltage on the first axis to obtain the target output reference voltage on the first axis.

The second axis adjustment sub-module is configured to determine, through the proportional integral control link, a voltage adjustment value on the second axis according to the output current limit value on the first axis and an output current on the first axis; and adjust, by using the voltage adjustment value on the second axis, the output reference voltage on the second axis to obtain the target output reference voltage on the second axis. Here, the output current on the second axis and the output current on the first axis are obtained by transforming a three-phase output current of the converter into the preset two-phase coordinate system.

In some embodiments, the first axis adjustment sub-module may include a first calculation unit and a first limiting unit.

The first calculation unit is configured to calculate the voltage adjustment value on the first axis through

$$u_{vd} = (i_{qLim} - i_q)(\frac{k_i + sk_p}{s})$$ . Here, $u_{vd}$ denotes the voltage adjustment value on the first axis, $i_{qLim}$ denotes the output current limit value on the second axis, and $i_q$ denotes the output current on the second axis. $k_i$ denotes an integral coefficient, $k_p$ denotes a proportional coefficient, and s denotes an operator variable of the Laplace transformation. $i_{qLim}$ is positive if $i_q > 0$, and $i_{qLim}$ is negative if $i_q < 0$ .

The first limiting unit is configured to adjust, if $i_q > 0$, the voltage adjustment value on the first axis to a first threshold when the voltage adjustment value on the first axis is greater than the first threshold; and adjust, if $i_q < 0$, the voltage adjustment value on the first axis to a second threshold when the voltage adjustment value on the first axis is less than the second threshold.

The second axis adjustment sub-module may include a second calculation unit and a second limiting unit.

The second calculation unit is configured to calculate the voltage adjustment value on the second axis through

$$u_{vq} = (i_d - i_{dLim})(\frac{k_i + sk_p}{s})$$

. Here, $u_{vq}$ denotes the voltage adjustment value on the second axis, $i_{dLim}$ denotes the output current limit value on the first axis, and $i_d$ denotes the output current on the first axis. $i_{dLim}$ is positive if $i_d > 0$, and $i_{dLim}$ is negative if $i_d < 0$ .

The second limiting unit is configured to adjust, if $i_d > 0$, the voltage adjustment value on the second axis to a third threshold when the voltage adjustment value on the second axis is greater than the third threshold; and adjust, if $i_d < 0$, the voltage adjustment value on the second axis to a fourth threshold when the voltage adjustment value on the second axis is less than the fourth threshold.

In some embodiments, each of the first threshold, the second threshold, the third threshold and the fourth threshold is 0.

In the embodiment of the disclosure, with the current limiting adjustment module 30, by using the preset maximum output current limit value of the converter, the virtual impedance current limiting adjustment is performed on the output reference voltage on the first axis and/or the output reference voltage on the second axis, to obtain the target output reference voltage on the first axis and the target output reference voltage on the second axis in the preset two-phase coordinate system. The output current of the grid-forming converter may be limited by the virtual impedance control technology, such that the converter may still maintain the voltage source characteristics after current limiting, which improves stability of the converter while ensuring safe operation of the converter.

Corresponding to the above method embodiments, an embodiment of the disclosure further provides a current limiting control apparatus for a grid-forming converter. The current limiting control apparatus for the grid-forming converter described below and the current limiting control method for the grid-forming converter described above may be referred to each other.

Please refer to FIG. 7, which is a block diagram of a structure of a current limiting control apparatus for a grid-forming converter provided by an embodiment of the disclosure. The apparatus may include a current transformation module 710, a voltage drop acquisition module 720, a fault determination module 730 and a fault ride-through module 740.

The current transformation module 710 is configured to acquire a target output current in a preset two-phase coordinate system corresponding to a three-phase output current of a converter. Here, the target output current is an output current on the second axis in the preset two-phase coordinate system, and the target output current is related to a reactive current of the converter. The output end of the converter is connected to the power grid. The output current limit value on the second axis mentioned in the embodiments of FIG. 1 and FIG. 2 is taken as a preset maximum reactive current limit value.

The voltage drop acquisition module 720 is configured to acquire a voltage drop value of a virtual impedance according to the target output current and the preset maximum reactive current limit value.

The fault determination module 730 is configured to determine a voltage condition of the power grid according to the voltage drop value of the virtual impedance. The voltage drop value of the virtual impedance is the voltage adjustment value on the first axis mentioned in the embodiments of FIG. 1 and FIG. 2.

The fault ride-through module 740 is configured to reduce a given value of an active power of the converter to a preset power value if the voltage condition is that a fault occurs.

In some embodiments, the voltage drop acquisition module 720 may be specifically configured to determine, through a proportional integral control link, the voltage drop value of the virtual impedance according to the target output current and the preset maximum reactive current limit value.

In some embodiments, the preset two-phase coordinate system is a dq rotary coordinate system. The voltage drop acquisition module 720 may include a calculation sub-module and an adjustment sub-module.

The calculation sub-module is configured to calculate the voltage drop value of the virtual impedance through

$$u_{vd} = (i_{qLim} - i_q)(\frac{k_i + sk_p}{s})$$

. Here, $u_{vd}$ denotes the voltage drop value of the virtual impedance, $i_{qLim}$ denotes the preset maximum reactive current limit value, and $i_q$ denotes the target output current. $k_i$ denotes an integral coefficient, $k_p$ denotes a proportional coefficient, and s denotes an operator variable of the Laplace transformation. $i_{qLim}$ is positive if $i_q >$

0, and $i_{qLim}$ is negative if $i_q < 0$ .

The adjustment sub-module is configured to adjust, if $i_q > 0$, the voltage drop value of the virtual impedance to a current limiting threshold when the voltage drop value of the virtual impedance is greater than the current limiting threshold; and adjust, if $i_q < 0$, the voltage drop value of the virtual impedance to the current limiting threshold when the voltage drop value of the virtual impedance is less than the current limiting threshold.

In some embodiments, the fault determination module 730 may be specifically configured to determine that a voltage condition of a power grid is that a fault occurs if the voltage drop value of the virtual impedance is not the current limiting threshold.

In some embodiments, the apparatus may further include a reference adjustment module and an target acquisition module.

The reference adjustment module is configured to adjust a target output reference voltage by the voltage drop value of the virtual impedance to obtain an adjusted target output reference voltage. Here, the target output reference voltage is an output reference voltage on the first axis or an output reference voltage on the second axis in the preset two-phase coordinate system obtained by transforming a three-phase output reference voltage of the converter, and the target output reference voltage is related to a reactive power of the converter. The output reference voltage on the first axis mentioned in the embodiments of FIG. 1 and FIG. 2 is the target output reference voltage.

The target acquisition module is configured to acquire the three-phase target output voltage of the converter according to a non-target output reference voltage and the adjusted target output reference voltage. Here, the non-target output reference voltage is an output reference voltage on the other axis other than the target output reference voltage in the preset two-phase coordinate system obtained by transforming the three-phase output reference voltage. The output reference voltage on the second axis mentioned in the embodiments of FIG. 1 and FIG. 2 is the non-target output reference voltage.

In some embodiments, the preset two-phase coordinate system is a dq rotary coordinate system. The target output current is an output current on the q axis, and the target output reference voltage is an output reference voltage on the d axis.

In some embodiments, the target acquisition module may include a double closed-loop sub-module and a transformation sub-module.

The double closed-loop sub-module is configured to obtain, through a double closed-loop control of an voltage outer loop and an current inner loop, a target output voltage on the first axis and a target output voltage on the second axis in the preset two-phase coordinate system according to the non-target output reference voltage and the adjusted target output reference voltage.

The transformation sub-module is configured to transform the target output voltage on the first axis and the target output voltage on the second axis to the three-phase target output voltage.

In some embodiments, the converter is an inverter, and the three-phase output reference voltage is a three-phase reference voltage of a VSG.

In the embodiment of the disclosure, with the voltage drop acquisition module 720, the voltage drop value of the virtual impedance is acquired according to the target output current and the preset maximum reactive current limit value, which may detect the power grid voltage fault by the virtual impedance control technology, and improve accuracy and timeliness of the detection of the power grid voltage fault. Therefore, in case that the power grid voltage fails, the output current of the converter is reduced by limiting the active power to avoid instability of the power angle, so as to achieve stable ride-through of the power grid voltage fault.

Corresponding to the above method embodiments, an embodiment of the disclosure further provides a converter. The converter described below and the current limiting control method for the grid-forming converter described above may be referred to each other.

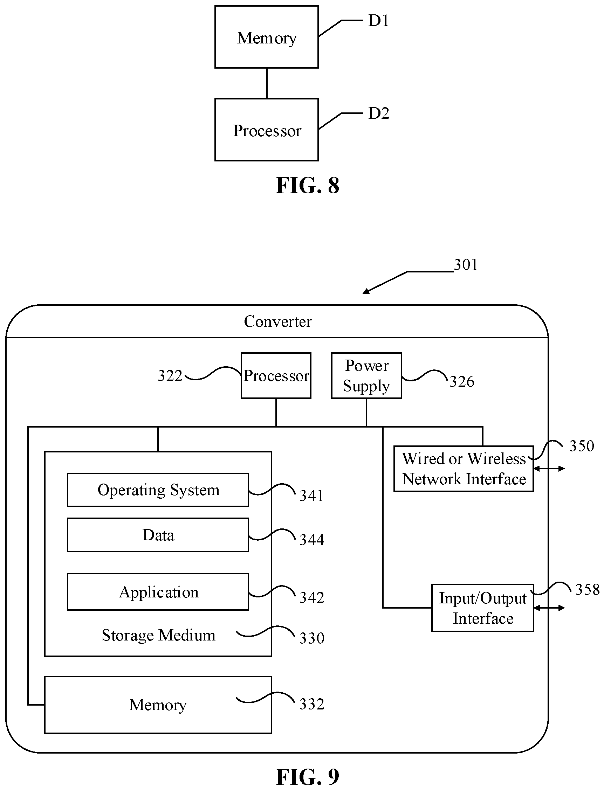

Please refer to FIG. 8, which is a schematic diagram of a structure of a converter provided by an embodiment of the disclosure. The converter may include a memory D1 and a processor D2.

The memory D1 is configured to store a computer program.

The processor D2 is configured to implement, when executing the computer program, operations of the current limiting control method for the grid-forming converter provided by the above method embodiments.

Specifically, please refer to FIG. 9, which is a schematic diagram of a specific structure of a converter provided by an embodiment of the disclosure. The converter may vary considerably depending on different configuration or performance. The converter may include one or more central processing units (CPU) 322 (e.g. one or more processors), a memory 332, and one or more storage media 330 (e.g. one or more mass storage devices) that store applications 342 or data 344. Here, the memory 332 and the storage medium 330 may be transient or persistent storage. The program stored in the storage medium 330 may include one or more modules (not indicated in the figures), and each module may include a series of instruction operations on the device. Further, the CPU 322 may be set to communicate with the storage medium 330 to execute a series of instruction operations in the storage medium 330 on the converter 301.

The converter 301 may further include at least one of one or more power supplies 326, one or more wired or wireless network interfaces 350, one or more input/output interfaces 358, or, one or more operating systems 341, for example, Windows ServerTM, Mac OS XTM, UnixTM, LinuxTM, FreeBSDTM, or the like.

Here, the converter 301 may specifically be an inverter with VSG control, and may also specifically be a UPS device.

Operations of the current limiting control method for the grid-forming converter described above may be implemented by the structure of the converter.

Corresponding to the above method embodiments, an embodiment of the disclosure further provides a computer-readable storage medium. The computer-readable storage medium described below and the current limiting control method for the grid-forming converter described above may be referred to each other.

The computer-readable storage medium has stored thereon a computer program that, when executed by a processor, implements operations of the current limiting control method for the grid-forming converter in the above method embodiments.

The computer-readable storage medium may specifically be a readable storage medium that can store program codes, such as a USB disk, a portable hard disk, a Read-Only Memory (ROM), a Random Access Memory (RAM), a disk, a CD, or the like.

Each embodiment in the Specification is described in a progressive manner, and each embodiment focuses on its differences from other embodiments. The same and similar parts of each embodiment can be referred to each other. For the apparatus, converter and computer-readable storage medium disclosed in the embodiments, the description is relatively simple since they correspond to the method disclosed by the embodiments, and the relevant points may be referred to the description of the method part.

The current limiting control method and apparatus for the grid-forming converter, the converter, and the computer-readable storage medium provided by the disclosure are introduced above in detail. Specific examples are used herein to illustrate the principle and implementation of the disclosure, and the illustration of the above embodiments is only to help understand the method of the disclosure and its core idea. It is to be noted that for those of ordinary skill in the art, several improvements and modifications may also be made to the disclosure without deviating from the principle of the disclosure, and these improvements and modifications also fall within the scope of protection of the disclosure.

## Claims

1. A current limiting control method for a grid-forming converter, comprising:

   acquiring a three-phase output reference voltage of a converter, wherein an output end of the converter is connected to a power grid;
   performing a transformation to obtain an output reference voltage on a first axis and an output reference voltage on a second axis in a preset two-phase coordinate system corresponding to the three-phase output reference voltage;
   performing virtual impedance current limiting adjustment on the output reference voltage on the first axis and/or the output reference voltage on the second axis by using a preset maximum output current limit value of the converter, to obtain an target output reference voltage on the first axis and/or an target output reference voltage on the second axis in the preset two-phase coordinate system, wherein the preset maximum output current limit value comprises: an output current limit value on the second axis corresponding to the output reference voltage on the first axis, and/or an output current limit value on the first axis corresponding to the output reference voltage on the second axis; and
   acquiring a three-phase target output voltage of the converter according to the target output reference voltage on the first axis and the target output reference voltage on the second axis.

2. The method of claim 1, wherein the converter is an inverter, and the three-phase output reference voltage is a three-phase reference voltage of a Virtual Synchronous Generator (VSG).

3. The method of claim 1, wherein the preset two-phase coordinate system is a dq rotary coordinate system, the first axis corresponds to an active parameter and the second axis corresponds to a reactive parameter.

4. The method of claim 1, wherein acquiring the three-phase target output voltage of the converter according to the target output reference voltage on the first axis and the target output reference voltage on the second axis comprises:

   obtaining, through a double closed-loop control of an voltage outer loop and an current inner loop, a target output voltage on the first axis and a target output voltage on the second axis in the preset two-phase coordinate system according to the target output reference voltage on the first axis and the target output reference voltage on the second axis; and

transforming the target output voltage on the first axis and the target output voltage on the second axis to the three-phase target output voltage.

**5.** The method of any one of claims 1 to 4, wherein performing the virtual impedance current limiting adjustment on the output reference voltage on the first axis and/or the output reference voltage on the second axis by using the preset maximum output current limit value of the converter, to obtain the target output reference voltage on the first axis and/or the target output reference voltage on the second axis in the preset two-phase coordinate system comprises:

determining, through a proportional integral control link, a voltage adjustment value on the first axis according to the output current limit value on the second axis and an output current on the second axis; and adjusting the output reference voltage on the first axis by using the voltage adjustment value on the first axis, to obtain the target output reference voltage on the first axis; and/or

determining, through the proportional integral control link, a voltage adjustment value on the second axis according to the output current limit value on the first axis and an output current on the first axis; and adjusting the output reference voltage on the second axis by using the voltage adjustment value on the second axis, to obtain the target output reference voltage on the second axis; wherein the output current on the second axis and the output current on the first axis are obtained by transforming a three-phase output current of the converter into the preset two-phase coordinate system, the output current on the first axis is an active current, and the output current on the second axis is a reactive current.

**6.** The method of claim 5, wherein determining, through the proportional integral control link, the voltage adjustment value on the first axis according to the output current limit value on the second axis and the output current on the second axis comprises:

calculating the voltage adjustment value on the first axis through $u_{vd} = (i_{qLim} - i_q)(\frac{k_i + sk_p}{s})$ ; wherein $u_{vd}$ denotes the voltage adjustment value on the first axis, $i_{qLim}$ denotes the output current limit value on the second axis, $i_q$ denotes the output current on the second axis, $k_i$ denotes an integral coefficient, $k_p$ denotes a proportional coefficient, and s denotes an operator variable of a Laplace transformation; $i_{qLim}$ is positive if $i_q > 0$ , and $i_{qLim}$ is negative if $i_q < 0$; and

adjusting, if $i_q > 0$, the voltage adjustment value on the first axis to a first threshold when the voltage adjustment value on the first axis is greater than the first threshold; and adjusting, if $i_q < 0$, the voltage adjustment value on the first axis to a second threshold when the voltage adjustment value on the first axis is less than the second threshold;

wherein determining, through the proportional integral control link, the voltage adjustment value on the second axis according to the output current limit value on the first axis and the output current on the first axis comprises:

calculating the voltage adjustment value on the second axis through $u_{vq} = (i_d - i_{dLim})(\frac{k_i + sk_p}{s})$ ; wherein $u_{vq}$ denotes the voltage adjustment value on the second axis, $i_{dLim}$ denotes the output current limit value on the first axis, and $i_d$ denotes the output current on the first axis; $i_{dLim}$ is positive if $i_d > 0$ , and $i_{dLim}$ is negative if $i_d < 0$ ; and

adjusting, if $i_d > 0$, the voltage adjustment value on the second axis to a third threshold when the voltage adjustment value on the second axis is greater than the third threshold; and adjusting, if $i_d < 0$, the voltage adjustment value on the second axis to a fourth threshold when the voltage adjustment value on the second axis is less than the fourth threshold.

**7.** The method of claim 5, wherein when performing the virtual impedance current limiting adjustment on the output reference voltage on the first axis by using the preset maximum output current limit value of the converter, to obtain the target output reference voltage on the first axis in the preset two-phase coordinate system,

determining a voltage condition of the power grid according to a voltage drop value of a virtual impedance, wherein the output current on the second axis is taken as a target output current, the output current limit value on the second axis is taken as a preset maximum reactive current limit value, and the voltage drop value of the virtual

EP 4 629 470 A1

impedance is the voltage adjustment value on the first axis; and

reducing, if the voltage condition is that a fault occurs, a given value of an active power of the converter to a preset power value.

8. The method of claim 6, wherein when performing the virtual impedance current limiting adjustment on the output reference voltage on the first axis by using the preset maximum output current limit value of the converter, to obtain the target output reference voltage on the first axis in the preset two-phase coordinate system,

determining a voltage condition of the power grid according to a voltage drop value of a virtual impedance, wherein the output current on the second axis is taken as a target output current, the output current limit value on the second axis is taken as a preset maximum reactive current limit value, and the voltage drop value of the virtual impedance is the voltage adjustment value on the first axis; and

reducing, if the voltage condition is that a fault occurs, a given value of an active power of the converter to a preset power value.

9. The method of claim 8, wherein determining the voltage condition of the power grid according to the voltage drop value of the virtual impedance comprises:

determining, if the voltage drop value of the virtual impedance is not a current limiting threshold, the voltage condition of the power grid is that the fault occurs, wherein each of the first threshold and the second threshold is the current limiting threshold.

10. The method of claim 6, wherein each of the first threshold, the second threshold, the third threshold and the fourth threshold is 0.

11. A current limiting control apparatus for a grid-forming converter, comprising:

a reference acquisition module, configured to acquire a three-phase output reference voltage of a converter, wherein an output end of the converter is connected to a power grid;

a coordinate transformation module, configured to perform a transformation to obtain an output reference voltage on a first axis and an output reference voltage on a second axis in a preset two-phase coordinate system corresponding to the three-phase output reference voltage;

a current limiting adjustment module, configured to perform virtual impedance current limiting adjustment on the output reference voltage on the first axis and/or the output reference voltage on the second axis by using a preset maximum output current limit value of the converter, to obtain an target output reference voltage on the first axis and/or an target output reference voltage on the second axis in the preset two-phase coordinate system, wherein the preset maximum output current limit value comprises: an output current limit value on the second axis corresponding to the output reference voltage on the first axis, and/or an output current limit value on the first axis corresponding to the output reference voltage on the second axis; and

a reference control module, configured to acquire a three-phase target output voltage of the converter according to the target output reference voltage on the first axis and the target output reference voltage on the second axis.

12. A converter, comprising:

a memory, configured to store a computer program; and

a processor, configured to implement, when executing the computer program, operations of the method of any one of claims 1 to 10.

13. A computer-readable storage medium having stored thereon a computer program that, when executed by a processor, implements operations of the method of any one of claims 1 to 10.

EP 4 629 470 A1

```
┌──────────────────────────────────────────────────────────┐   S101
│ A three-phase output reference voltage of a converter is │
│ acquired. The output end of the converter is connected   │
│ to the power grid                                        │
└──────────────────────────────────────────────────────────┘
                             │
                             ▼
┌──────────────────────────────────────────────────────────┐   S102
│ A transformation is performed to obtain an output        │
│ reference voltage on the first axis and an output        │
│ reference voltage on the second axis in a preset two-phase│
│ coordinate system corresponding to the three-phase       │
│ output reference voltage                                 │
└──────────────────────────────────────────────────────────┘
                             │
                             ▼
┌──────────────────────────────────────────────────────────┐   S103
│ Virtual impedance current limiting adjustment is         │
│ performed on the output reference voltage on the first   │
│ axis and/or the output reference voltage on the second   │
│ axis by using a preset maximum output current limit value│
│ of the converter, to obtain an target output reference   │
│ voltage on the first axis and an target output reference │
│ voltage on the second axis in the preset two-phase       │
│ coordinate system                                        │
└──────────────────────────────────────────────────────────┘
                             │
                             ▼
┌──────────────────────────────────────────────────────────┐   S104
│ The three-phase target output voltage of the converter is│
│ acquired according to the target output reference voltage│
│ on the first axis and the target output reference voltage│
│ on the second axis                                       │
└──────────────────────────────────────────────────────────┘
```

**FIG. 1**

20

FIG. 2

A target output current in a preset two-phase coordinate system corresponding to a three-phase output current of a converter is acquired ⌐S301

A voltage drop value of a virtual impedance is acquired according to the target output current and the preset maximum reactive current limit value ⌐S302

A voltage condition of the power grid is determined according to the voltage drop value of the virtual impedance ⌐S303

If the voltage condition is that a fault occurs, the given value of the active power of the converter is reduced to the preset power value ⌐S304

**FIG. 3**

Energy Storage

Grid

PWM

$\theta$

abc / dq

$u_{Cabc}$  $i_{gabc}$

Power

$P_{fdb}$  $Q_{fdb}$  $Q_{ref}$

VSG

$E_m$  $\theta$

$P_{max}$  $P_{ref}$  $P_{min}$

$P_{ref}$

Active Power Limitation in case of High or Low Ride-Through Fault

**Current Inner Loop**

$U_{c,d}$  $U_{c,q}$

PI  PI

$I_{in,d}$  $I_{in,q}$

$I_{in,dref}$  $I_{in,qref}$

**Voltage Outer Loop**

$I_{g,d}$  $I_{g,q}$

PI  PI

$U_{c,d}$  $U_{c,q}$

$U_{c,dref}$  $U_{c,qref}$

$L_1$  $i_{in}$  $u_{Cabc}$  $L_2$  $i_g$

**Virtual Impedance Current Limiting in case of High or Low Ride-Through Fault**

$U'_{c,dref}$

$U_{vd}$

$U_{vdmax}$

$(k_i + k_p s)/s$

$U_{vdmin}$

$i_q$

$i_{qLim}$

dq Transformation

**FIG. 4**

23

**FIG. 5**

**FIG. 6**

**FIG. 7**

Memory — D1

Processor — D2

**FIG. 8**

301

Converter

322 — Processor | Power Supply — 326

Operating System — 341

Data — 344

Application — 342

Storage Medium — 330

Memory — 332

Wired or Wireless Network Interface — 350

Input/Output Interface — 358

**FIG. 9**

Europäisches
Patentamt

European
Patent Office

Office européen
des brevets

# EUROPEAN SEARCH REPORT

**Application Number**

EP 25 15 1951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/117004 A1 (VESTAS WIND SYS AS [DK]) 29 June 2023 (2023-06-29) <br> * figure 4 * <br> * page 8, line 34 - page 18, line 17 * <br> ----- | 1-13 | INV. <br> H02J3/38 <br> H02J3/46 |
| A | CN 115 549 069 A (UNIV TIANJIN) 30 December 2022 (2022-12-30) <br> * abstract * <br> ----- | 1-13 | |

**TECHNICAL FIELDS SEARCHED (IPC)**

H02J

The present search report has been drawn up for all claims

| Place of search | Date of completion of the search | Examiner |
|---|---|---|
| Munich | 17 June 2025 | Berger, Josef |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    .................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 1951

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | | Publication date |
|---|---|---|---|---|
| WO 2023117004 A1 | 29-06-2023 | AU | 2022423132 A1 | 27-06-2024 |
| | | CN | 118679658 A | 20-09-2024 |
| | | EP | 4454093 A1 | 30-10-2024 |
| | | US | 2025062709 A1 | 20-02-2025 |
| | | WO | 2023117004 A1 | 29-06-2023 |
| CN 115549069 A | 30-12-2022 | NONE | | |

EPO FORM P0459

For more details about this annex : see Official Journal of the European Patent Office, No. 12/82